# EUROPÄISCHE PATENTSCHRIFT

(11) **EP 4 316 743 B1**
(45) Veröffentlichungstag und Bekanntmachung des Hinweises auf die Patenterteilung: **01.10.2025**
(21) Anmeldenummer: 22188419.0
(22) Anmeldetag: 03.08.2022
(51) Int. Cl.: B25J 11/00, B25J 15/04, B25J 19/00, B25F 5/00, B25J 5/00

(54) **SCHNITTSTELLENADAPTER UND SYSTEM MIT EINEM BAUROBOTER, EINEM SCHNITTSTELLENADAPTER UND WENIGSTENS EINER WERKZEUGMASCHINE**
INTERFACE ADAPTER AND SYSTEM WITH A CONSTRUCTION ROBOT, AN INTERFACE ADAPTER AND AT LEAST ONE MACHINE TOOL
ADAPTATEUR D'INTERFACE ET SYSTÈME COMPRENANT UN ROBOT DE CONSTRUCTION, UN ADAPTATEUR D'INTERFACE ET AU MOINS UNE MACHINE-OUTIL

(43) Veröffentlichungstag der Anmeldung: 07.02.2024
(73) Patentinhaber: Hilti Aktiengesellschaft, 9494 Schaan (LI)
(72) Erfinder: Hartmann, Markus, 87665 Mauerstetten (DE); Rehorik, Kilian, 97082 Würzburg (DE); Freischle, Justus, 86899 Landsberg (DE); Hauser, Klaus, 86830 Schwabmünchen (DE); Frenzel, Mathias, 86944 Unterdießen (DE); Koscheck, David, 86899 Landsberg (DE); Ziegler, Bernd, 86830 Schabmünchen (DE); Schmid, Tobias, 86875 Emmenhausen (DE)
(74) Vertreter: Hilti Aktiengesellschaft Corporate Intellectual Property

(56) Entgegenhaltungen:
- DE-A1- 102018 208 028
- DE-A1- 102020 124 672
- DE-U1- 202014 003 133
- JP-B1- 6 872 050
- KR-B1- 102 339 489
- US-A1- 2020 254 628
- US-A1- 2021 138 664

## Beschreibung

Die Erfindung befasst sich mit der Verbindung einer elektrischen Werkzeugmaschine mit einem Bauroboter, wie im Oberbegriff von Anspruch 1 beschrieben und wie aus US 2021/0138664 und KR 102339489 bekannt.

Um einen Bauroboter möglichst flexibel und dennoch kostengünstig einsetzen zu können, ist es wünschenswert, wenn der Bauroboter mit unterschiedlichen Arten von elektrischen Werkzeugmaschinen zusammen genutzt werden kann. Besonders günstig wäre es, wenn breit verfügbare, qualitätserprobte und durch Massenfertigung verhältnismäßig günstige Werkzeugmaschinen mit geringem Aufwand zusammen mit einem Bauroboter genutzt werden könnten.

Dabei ist zu bedenken, dass die auf Baustellen herrschenden Bedingungen häufig wenig vorhersehbar sind und sich von Baustelle zu Baustelle unterscheiden können.

Auch sollten unterschiedlichste Arten von Bauarbeiten mit dem Bauroboter ausführbar sein, dementsprechend sollte eine besonders große Vielzahl unterschiedlicher Arten von Werkzeugmaschinen nutzbar sein.

Aufgabe der vorliegenden Erfindung ist es daher, ein Gerät anzubieten, das auf einfache Weise eine Nutzung unterschiedlicher Arten von elektrischen Werkzeugmaschinen mit einem Bauroboter ermöglicht.

Gelöst wird die Aufgabe durch einen **Schnittstellenadapter** zur Verbindung einer elektrischen Werkzeugmaschine mit einem Endeffektor eines Bauroboters, wobei der Schnittstellenadapter eine Verbindungsstelle zur Verbindung mit einer Werkzeugmaschine aufweist, die komplementär zu einer Standard-Akkuschnittstelle einer Werkzeugmaschine ausgebildet ist.

Ein der Erfindung dabei zugrunde liegender Gedanke ist dabei, dass elektrische Werkzeugmaschinen, insbesondere akkubetriebene Werkzeugmaschinen, beispielsweise akkubetriebene Handwerkzeugmaschinen wie Handbohrmaschinen, insbesondere Gesteinsbohrmaschinen, Nagelsetzmaschinen, Schleifmaschinen, Sägemaschinen, Meißelmaschinen oder dergleichen, meistens eine zumindest über mehrere Arten von Werkzeugmaschinen beispielsweise ein und desselben Herstellers standardisierte, insbesondere einheitlich ausgebildete, Energieversorgungsschnittstellen aufweisen. So weisen Akku-betriebene Werkzeugmaschinen eine Standard-Akkuschnittstelle auf, über die ein dem jeweiligen Standard entsprechender Akkumulator an die Werkzeugmaschine montiert werden kann. Der Standard-Akkuschnittstelle können dabei wenigstens zwei Funktionalitäten zukommen: ersten kann die Standard-Akkuschnittstelle ausgebildet sein, den Akkumulator sicher an der Werkzeugmaschine zu halten. Dazu kann die Standard-Akkuschnittstelle beispielsweise einen Rastmechanismus aufweisen. Zweitens kann die Standard-Akkuschnittstelle zur Übertragung von Betriebsenergie eingerichtet sein. Die Betriebsenergie kann dabei unidirektional, insbesondere vom Akkumulator zur Werkzeugmaschine hin, übertragbar sein. Sie kann auch bidirektional übertragbar sein, beispielsweise um den Akkumulator im Wege der Rekuperation wiederaufzuladen. Die Standard-Akkuschnittstelle kann noch weitere Funktionalitäten aufweisen. Insbesondere kann sie auch zur Signalübertragung zwischen dem Akkumulator und der Werkzeugmaschine eingerichtet sein. Auch diese Signalübertragung kann unidirektional oder bidirektional sein.

Somit kann der Schnittstellenadapter an einer Seite am Endeffektor des Bauroboters montiert werden. Über die Verbindungsstelle kann der Schnittstellenadapter andererseits an der Standard-Akkuschnittstelle der Werkzeugmaschine, insbesondere anstelle eines herkömmlichen Akkumulators, montiert werden. Somit kann die Werkzeugmaschine über den Schnittstellenadapter am Endeffektor montiert werden. Dies ist mit allen Werkzeugmaschinen möglich, die die gleiche Standard-Akkuschnittstelle aufweisen, und somit in der Regel mit einer Vielzahl verschiedener Arten von, insbesondere mit einem Akkumulator betreibbaren, Werkzeugmaschinen.

In der Regel sind Standard-Akkuschnittstellen zur werkzeuglosen Befestigung und / oder zur werkzeuglosen Demontage eines Akkumulators ausgebildet. Somit lässt sich auch die Werkzeugmaschine einfach und schnell, insbesondere ohne dass ein Werkzeug benötigt würde, auch wieder vom Endeffektor trennen.

Da solche Standard-Akkuschnittstellen üblicherweise einen Rastmechanismus zur Fixierung des Akkumulators aufweisen, kann dennoch gewährleistet sein, dass die Werkzeugmaschine sicher am Endeffektor gehaltert ist.

Der Bauroboter kann zur Bearbeitung einer Wand und / oder einer Decke, insbesondere einer Hochbau-Baustelle, einer Tiefbau-Baustelle und / oder einer Industrieanlage eingerichtet sein.

Denkbar ist, dass der Schnittstellenadapter eine Werkzeugmaschinen-Signalschnittstelle und eine Bauroboter-Signalschnittstelle zur Übermittlung wenigstens eines Signals zwischen dem Bauroboter und der Werkzeugmaschine aufweist. Somit kann über eine mechanische Verbindung des Bauroboters mit der Werkzeugmaschine hinaus auch eine signaltechnische Verbindung zwischen den beiden Geräten mit Hilfe des Schnittstellenadapters hergestellt werden.

Unter einem Signal können beispielsweise wenigstens ein Steuersignal und / oder wenigstens ein Sensorsignal verstanden werden.

Die Übertragung kann uni- oder bidirektional sein.

Der Schnittstellenadapter kann auch eine zusätzliche Akkuschnittstelle und / oder eine zusätzliche Signalschnittstelle aufweisen, mit der ein Akkumulator am Schnittstellenadapter anschließbar ist.

Die Werkzeugmaschinen- und die Bauroboter-Signalschnittstellen können auch zur Betriebsenergieübertragung eingerichtet sind. Somit kann die Werkzeugmaschine mit elektrischer Betriebsenergie versorgbar sein. Dabei kann unter Betriebsenergie die Energie verstanden werden, die im Wesentlichen zum gewöhnlichen Betrieb der Werkzeugmaschine erforderlich ist. Entsprechend können die Signalschnittstellen eingerichtet sein, elektrische Momentanleistungen von wenigstens 0,1 kW, beispielsweise von mindestens 1 kW, zu übertragen.

Weist der Schnittstellenadapter die zusätzliche Akkuschnittstelle und / oder die zusätzliche Signalschnittstelle auf, kann auch Betriebsenergie zu einem an dieser bzw. diesen Schnittstellen angeordneten Akkumulator übertragbar sein, beispielsweise, um den Akkumulator aufzuladen. Es kann auch Betriebsenergie von diesem Akkumulator weg übertragbar sein, beispielsweise um kurzzeitig eine besonders erhöhte elektrische Leistung der Werkzeugmaschine bereitstellen zu können.

Zumindest ein Teil der Werkzeugmaschinen-Signalschnittstelle kann als Teil der Verbindungsstelle ausgebildet sein. Beispielsweise kann die Werkzeugmaschinen-Signalschnittstelle ein oder mehrere elektrische Kontakte der Verbindungsstelle nutzen oder zumindest mitnutzen.

So kann ein Sensorsignal über die Verbindungsstelle übertragbar sein.

Denkbar ist auch, dass eine separate Steuerschnittstelle zur Übertragung von Steuersignalen, beispielsweise zum Ein-/Ausschalten der Werkzeugmaschine oder zum Steuern wenigstens eines Arbeitsparameters, beispielsweise einer Drehzahl, vorhanden ist. Dies kann beispielsweise bei Werkzeugmaschinen hilfreich sein, bei denen wenigstens eine zur Steuerung der Werkzeugmaschine erforderliche Funktion nicht über die Standard-Akkuschnittstelle steuerbar ist.

Der Schnittstellenadapter kann auch einen Signalwandler umfassen, der eingerichtet ist, ein an einer der Signalschnittstellen ankommendes Signal umzuwandeln, beispielsweise einen Pegel, eine Impedanz oder eine Signalcodierung des Signals zu verändern, und an der anderen Signalschnittstelle auszugeben.

Denkbar ist insbesondere, dass der Signalwandler eingerichtet ist, ein in "Robotersprache" vom Bauroboter abgesandtes Sensor- und / oder Steuersignal in eine von der Werkzeugmaschine verarbeitbare Signalform zu übersetzen. Alternativ oder ergänzend ist auch denkbar, dass der Signalwandler eingerichtet ist, ein Sensor- und / oder Steuersignal der Werkzeugmaschine in eine für den Bauroboter verarbeitbare Signalform umzusetzen.

Somit kann der Bauroboter in die Lage versetzt werden, unterschiedliche Arten von Werkzeugmaschinen mit jeweils Werkzeugmaschinen-unabhängigen Signalen zu steuern oder umgekehrt Signale von unterschiedlichen Werkzeugmaschinen zu empfangen.

Die Übertragung von Signalen kann dabei halbduplex- oder vollduplex-basiert erfolgen. Sie kann differentiell oder massebezogen sein.

Denkbar ist auch alternativ oder ergänzend, dass der Signalumwandler die zu übertragende Betriebsenergie umwandelt.

Die Signalschnittstellen können elektrische Schnittstellen sein. Beispielsweise kann vorgesehen sein, auf die Betriebsenergie-Versorgung wenigstens ein Signal aufzumodulieren.

Denkbar ist alternativ oder ergänzend auch, dass wenigstens eine der Signalschnittstellen zur drahtlosen Datenübertragung, insbesondere zur optischen und / oder Funk-basierten Datenübertragung, eingerichtet ist. Günstig ist beispielsweise, wenn die drahtlose Datenübertragung einen Funkstandard mit niedriger Energie nutzt. Die Verbindung kann selbsttätig koppelnd sein. Denkbar sind insbesondere eine induktive, eine Mikrowellen-basierte und / oder eine optische, bspw. eine Infrarot-basierte, Datenübertragung. Eine solche drahtlose Datenübertragung kann selbst in stark Staub-belasteten Umgebungen, wie sie auf Baustellen häufig anzutreffen sind, sicher erfolgen. Auch benötigt eine solche Datenübertragung zur Kopplung keine mechanische Interaktion, sodass sich das An- und das Abkoppeln vereinfachen.

Der Schnittstellenadapter kann auch eine Steuereinheit aufweisen, die eingerichtet ist, ein Steuersignal zu erzeugen und an wenigstens eine der beiden Signalschnittstellen auszugeben.

Dazu kann der Schnittstellenadapter einen Mikrocontroller aufweisen. Der Mikrocontroller kann einen Speicher, einen Mikroprozessor und/oder auf dem Mikroprozessor ausführbaren, im Speicher gespeicherten Programmcode aufweisen.

Mit einer solchen Steuereinheit kann der Schnittstellenadapter die angeschlossene Werkzeugmaschine und / oder den Bauroboter steuern. Beispielsweise kann die Steuereinheit, insbesondere der Programmcode, eingerichtet sein, einen Störfall, beispielsweise eine fehlerhafte Anordnung der Werkzeugmaschine am Schnittstellenadapter, zu detektieren. Sie kann dann eingerichtet sein, dem Bauroboter ein entsprechendes Signal über die Bauroboter-Signalschnittstelle zu senden. Der Bauroboter kann infolge des Signals beispielsweise eine Störfallbehandlungsroutine starten. Ein weiteres Beispiel ist, dass die Steuereinheit der Werkzeugmaschine ein Abfragesignal über die Werkzeugmaschinen-Signalschnittstelle sendet.

Die Werkzeugmaschine kann dann ein Antwortsignal zurücksenden. Beispielsweise kann die Steuereinheit auf diese Weise einen Parameter der Werkzeugmaschine abfragen und / oder einen Parameter einstellen.

So kann sie beispielsweise eingerichtet sein, einen Typ oder eine Kennung der Werkzeugmaschine abfragen. Sie kann dann eingerichtet eingerichtet sein, einen Parameter der Steuereinheit selbst, beispielsweise ein die Umwandlung betreffender Parameter des Signalwandlers, dem Typ oder der Kennung entsprechend einzustellen und / oder den Parameter, hier der Typ oder die Kennung, an den Bauroboter über die Bauroboter-Signalschnittstelle weiterzuleiten. Analog ist auch denkbar, dass die Steuereinheit dem Bauroboter ein Abfragesignal sendet und von diesem ein Antwortsignal erhält. Infolge des Antwortsignals kann die Steuereinheit einen Parameter der Steuereinheit selbst und / oder der Werkzeugmaschine einstellen.

Insbesondere kann die Steuereinheit eingerichtet sein, wenigstens ein Sensorsignal von der Werkzeugmaschinen-Signalschnittstelle und / oder von der Bauroboter-Signalschnittstelle zu empfangen. Dann kann die das Sensorsignal von der Steuereinheit zur Steuerung genutzt werden. Steht das Sensorsignal beispielsweise in Bezug auf durch die Werkzeugmaschine ausgelöste Vibrationen, so kann die Steuereinheit bei Überschreiten eines bestimmten Ausmaßes an Vibrationen der Werkzeugmaschine ein Steuersignal zum Arbeiten mit geringerer Leistung und / oder zum Einlegen eines Ruhemodus über die Werkzeugmaschinen-Signalschnittstelle senden. So kann der Bauroboter vor mechanischer Überbeanspruchung geschützt werden.

Alternativ oder ergänzend sind auch weitere Sensorsignale denkbar, beispielsweise Sensorsignale, die mindestens eine Kenngröße der Werkzeugmaschine und / oder des Bauroboters, beispielsweise bezüglich Vibration, Strom, Kraft, Temperatur, Werkzeugmaschinenart, Lage und / oder Position, eine Wegstrecke, ein Vorschub und / oder dergleichen, indizieren.

Ist die Akkuschnittstelle verfügbar, kann das Sensorsignal auch in Bezug auf einen an die Akkuschnittstelle angeschlossenen Akkumulator beziehen.

Auch ist denkbar, dass das Sensorsignal einen Betriebsmodus indiziert und / oder das die Steuereinheit einen Betriebsmodus, insbesondere der Werkzeugmaschine, einstellt.

Beispielsweise kann so das Verhalten der Werkzeugmaschine danach ausgerichtet werden, ob ein Akkumulator oder der Schnittstellenadapter angeschlossen ist. Je nach erkanntem Zustand kann beispielsweise ein Trigger gesetzt oder ignoriert werden. Es kann beispielsweise ein Aufwachmodus ausgelöst werden. Es können auch Identifikationskennzeichen von der Steuereinheit gesendet und / oder von dieser empfangen werden.

Die Haltbarkeit des Bauroboters und / oder die Präzision, mit der Bauarbeiten ausgeführt werden können, lässt sich verbessern, wenn der Schnittstellenadapter wenigstens ein Dämpfungselement zur Dämpfung von auf den Schnittstellenadapter eintreffende Vibrationen aufweist. Das Dämpfungselement kann zur passiven und / oder aktiven Dämpfung eingerichtet sein.

Der Schnittstellenadapter selbst kann wenigstens einen Sensor aufweisen. Der Sensor kann beispielsweise ein Kraftsensor und / oder ein Drucksensor sein. Dann kann der Schnittstellenadapter eingerichtet sein, eine Anpresskraft, eine Zugkraft und / oder dergleichen zu messen.

In den Rahmen der Erfindung fällt des Weiteren ein **System** umfassend einen Bauroboter, einen Schnittstellenadapter der vorangehend und / oder nachfolgend beschriebenen Art und eine elektrische Werkzeugmaschine, wobei die elektrische Werkzeugmaschine eine Standard-Akkuschnittstelle aufweist und wobei die Standard-Akkuschnittstelle der Werkzeugmaschine an der Verbindungsstelle des Schnittstellenadapters angeordnet ist.

Denkbar ist, dass das System auch zusätzlicher Adapterteile umfasst. So kann es Werkzeugmaschinen-spezifische und / oder Bauroboter-spezifische Adapterteile geben. Mit diesen lassen sich Werkzeugmaschinen und / oder Bauroboter an den Schnittstellenadapter anpassen.

Die Werkzeugmaschine kann eingerichtet sein, insbesondere über ihre Standard-Akkuschnittstelle, zu detektieren, ob an der Standard-Akkuschnittstelle ein Akkumulator oder der Schnittstellenadapter montiert ist Sie kann auch eingerichtet sein zu detektieren, ob an der Standard-Akkuschnittstelle überhaupt ein Element angeordnet ist, und insbesondere gegebenenfalls welcher Art das Element ist. So kann die Werkzeugmaschine beispielsweise eingerichtet sein, Rekuperation zu nutzen, wenn ein Akkumulator montiert ist und Rekuperation nicht zu nutzen, wenn der Schnittstellenadapter montiert ist.

Es ist auch denkbar, dass die Werkzeugmaschine umgebaut ist. So ist denkbar, einen Handgriffeinsatz der Werkzeugmaschine zumindest teilweise gegen ein Teil oder gegen den gesamten Schnittstellenadapter zu tauschen.

Der Bauroboter kann zur Ausführung von Bauarbeiten auf einer Hochbau-Baustelle und / oder einer Tiefbau-Baustelle und / oder einer, insbesondere Stahl-basierten, Industrieanlage, beispielsweise einer Ölplattform, ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Die Werkzeugmaschine kann ein Trennwerkzeug, ein Schleifwerkzeug und / oder ein Setzwerkzeug umfassen. Denkbar ist auch, dass der Endeffektor und / oder die Werkzeugmaschine zum Markieren ausgebildet sind. Beispielsweise kann der Endeffektor ein Farbsprühgerät aufweisen. Alternativ oder ergänzend kann am Endeffektor auch ein Messwerkzeug, beispielsweise ein Distanzmesser, angeordnet sein.

Am Endeffektor kann der Schnittstellenadapter montiert sein. Am Schnittstellenadapter kann wiederum die Werkzeugmaschine und / oder das Messwerkzeug montiert sein. Grundsätzlich kann der Bauroboter, insbesondere der Endeffektor, auch mehrere Werkzeugmaschinen und / oder Messwerkzeuge umfassen.

Der Bauroboter kann einen Manipulator aufweisen. Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen. Denkbar ist alternativ auch, dass die mobile Plattform eine Flugplattform ist oder eine solche umfasst. Beispielsweise kann der Bauroboter auch als Flugdrohne ausgebildet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung dargestellt und in der nachfolgenden Beschreibung näher erläutert.

### Es zeigen:

- Fig. 1: eine Werkzeugmaschine;
- Fig. 2: einen Schnittstellenadapter in einer Seitenansicht;
- Fig. 3: eine umgebaute Werkzeugmaschine mit einem Werkzeugmaschinen-Adapterteil in einer Seitenansicht;
- Fig. 4: eine Werkzeugmaschine während ihres Umbaus in einer perspektivischen Ansicht;
- Fig. 5: die umgebaute Werkzeugmaschine mit montiertem Schnittstellenadapter in einer Seitenansicht;
- Fig. 6: eine Innenansicht eines Teils des Schnittstellenadapters mit einer Steuereinheit in einer perspektivischen Ansicht; und
- Fig. 7: ein System umfassend einen Bauroboter, einen Schnittstellenadapter und eine Werkzeugmaschine.

In der nachfolgenden Beschreibung der Figuren werden zur Erleichterung des Verständnisses der Erfindung für gleiche oder sich funktional entsprechende Elemente jeweils die gleichen Bezugszeichen verwendet.

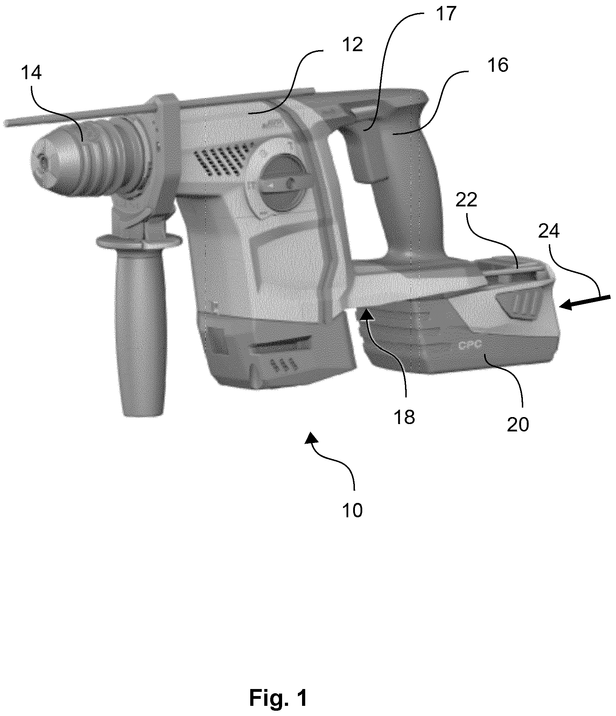

**Fig. 1** zeigt eine Werkzeugmaschine **10.** Die Werkzeugmaschine 10 ist eine akkubetriebene Gesteinsbohrmaschine.

Sie weist einen Grundkörper **12** auf, aus dem einenends eine Werkzeugaufnahme **14** herausragt. Anderenends weist sie einen Handgriff **16** auf. Am Handgriff 16 befindet sich ein Betätigungselement **17,** mit dem die Werkzeugmaschine 10 manuell steuerbar ist. Insbesondere kann mit dem Betätigungselement 17 ein Bohrvorgang gestartet, gestoppt oder eine Drehzahl reguliert werden.

Weiter weist sie eine Standard-Akkuschnittstelle **18** auf. Die Standard-Akkuschnittstelle 18 ist zur Aufnahme von Akkumulatoren ausgebildet. Sie dient unter anderem zur Fixierung des Akkumulators an der Werkzeugmaschine 10, zur Übertragung von Betriebsenergie zwischen dem Akkumulator und der Werkzeugmaschine 10 sowie zur Signalübertragung zwischen diesen beiden.

Beispielhaft zeigt Fig. 1 einen Akkumulator **20,** der im in Fig. 1 gezeigten Zustand in etwa zur Hälfte auf die Standard-Akkuschnittstelle 18 aufgeschoben ist.

Um den Akkumulator 20 an der Standard-Akkuschnittstelle 18 montieren zu können, weist der Akkumulator 20 eine Verbindungsstelle **22** auf, die komplementär zu der Standard-Akkuschnittstelle 18 ausgebildet ist.

Um den Akkumulator 20 vollständig zu montieren, müsste er in Richtung des Pfeils **24** weiter auf die Standard-Akkuschnittstelle 18 aufgeschoben werden. Zur vollständigen Demontage müsste der Akkumulator dementsprechend entgegen der Richtung des Pfeils 24 weiter von der Standard-Akkuschnittstelle 18 abgeschoben werden.

Montage als auch Demontage sind somit werkzeuglos möglich.

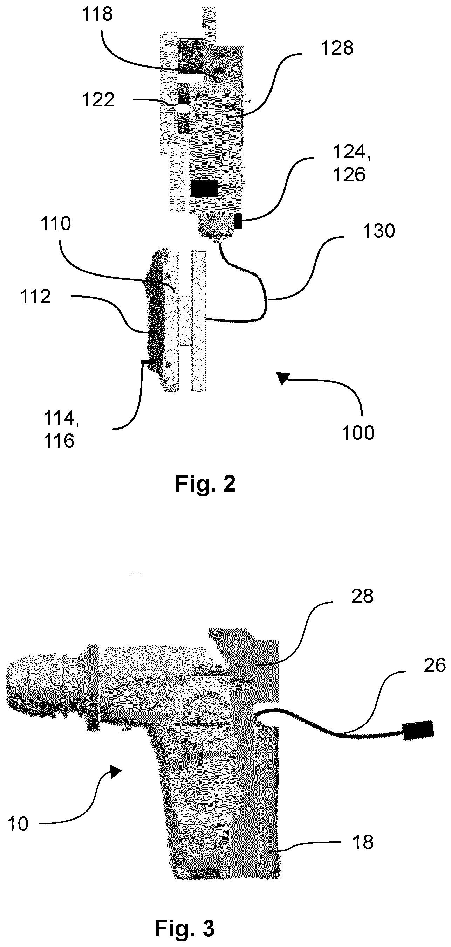

**Fig. 2** zeigt einen Schnittstellenadapter **100** zur Verbindung einer elektrischen Werkzeugmaschine mit einem Endeffektor eines Bauroboters.

Der Schnittstellenadapter weist eine Werkzeugmaschinen-Verbindungsstelle **110** zur Verbindung mit einer Werkzeugmaschine, z. B. der Werkzeugmaschine 10 gemäß Fig. 1, auf.

Die Werkzeugmaschinen-Verbindungsstelle 110 weist einen Werkzeugmaschinen-Verbindungsabschnitt **112** auf, der komplementär zu der Standard-Akkuschnittstelle 18 (siehe Fig. 1) ausgebildet ist. Somit ist auch die Werkzeugmaschinen-Verbindungsstelle 110 insgesamt komplementär zu der Standard-Akkuschnittstelle 18 ausgebildet.

Der Werkzeugmaschinen-Verbindungsabschnitt 112 weist elektrische Kontakte **114** auf. Ist die Werkzeugmaschine 10 an die Werkzeugmaschinen-Verbindungsstelle 110 angeschlossen, kann über die Kontakte 114 Betriebsenergie, insbesondere zum Betrieb der Werkzeugmaschine 10, übertragen werden. Beispielsweise kann vorgesehen sein, einen elektrischen Strom mit einer Spannung von rund 22 V Gleichspannung als Betriebsenergie zu übertragen.

Durch Aufmodulieren auf die zu übertragende Betriebsenergie können auch Signale bidirektional über die Kontakte 114 von und / oder zur Werkzeugmaschine 10 übertragen werden. Insofern bilden die Kontakte 114 in Verbindung mit der übrigen Werkzeugmaschinen-Verbindungsstelle 110 zugleich eine Werkzeugmaschinen-Signalschnittstelle **116.**

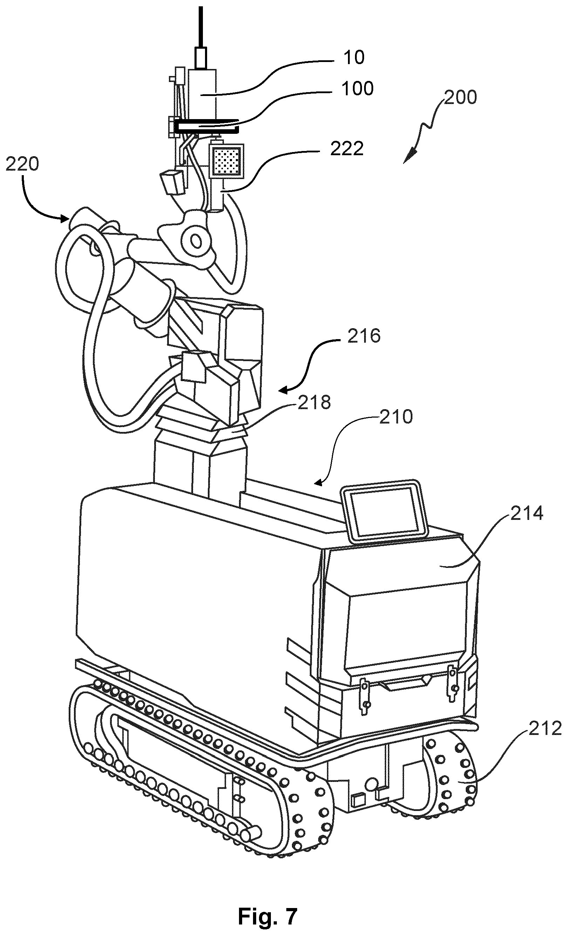

Weiter weist der Schnittstellenadapter 100 eine Bauroboter-Verbindungsstelle **118** auf. Diese dient zur Verbindung mit einem Endeffektor eines Bauroboters, beispielsweise dem noch weiter unten in Verbindung mit Fig. 7 näher beschriebenen Bauroboter.

Zur, insbesondere lösbaren, Befestigung des Schnittstellenadapters 100 am Endeffektor weist die Bauroboter-Verbindungsstelle 118 eine, insbesondere pneumatisch betätigbare, Halterung **120** auf.

Die Werkzeugmaschinen-Verbindungsstelle 110 kann auf ein Dämpfungselement **122** aufgeschoben werden, sodass sich das Dämpfungselement 122 im Wesentlichen zwischen der Werkzeugmaschinen-Verbindungsstelle 110 und der Bauroboter-Verbindungsstelle 118 befindet. Es dient zur Dämpfung von Vibrationen, die beispielsweise von der Werkzeugmaschine 10 während ihres Betriebs stammen können.

Über eine elektrische Kontaktbuchse **124** kann Betriebsenergie zwischen einem angeschlossenen Bauroboter und dem Schnittstellenadapter 100 übertragen werden. Beispielsweise kann Betriebsenergie in Form elektrischen Stroms mit einer Spannung von 48 V übertragbar sein.

Über die Kontaktbuchse 124 können durch Aufmodulieren auch Signale, insbesondere bidirektional, zwischen dem Schnittstellenadapter 100 und dem Bauroboter übertragen werden. Insofern bildet die Kontaktbuchse 124 in Verbindung mit der übrigen Bauroboter-Verbindungsstelle 118 zugleich eine Bauroboter-Signalschnittstelle **126.**

Somit können Signale zwischen der Werkzeugmaschine 10 und dem Bauroboter über die Werkzeugmaschinen-Signalschnittstelle 116 und über die Bauroboter-Signalschnittstelle 126 übermittelt werden.

Weiter weist der Schnittstellenadapter 100 eine Steuereinheit **128** auf.

Die Werkzeugmaschinen-Verbindungsstelle 110 ist elektrisch mit dem übrigen Schnittstellenadapter 100, insbesondere mit der Steuereinheit 128, über eine Verbindungsleitung **130** elektrisch verbunden.

Auch kann somit über die Werkzeugmaschinen- und die Bauroboter-Signalschnittstellen 116, 126 Betriebsenergie zwischen dem Bauroboter und der Werkzeugmaschine 10 übertragen werden.

**Fig. 3** zeigt die Werkzeugmaschine 10 in einer umgebauten Form. Im Vergleich zu der Gestalt gemäß Fig. 1 sind der Handgriff 16 mit dem Betätigungselement 17 sowie der Akkumulator 20 entfernt worden.

Das manuell bedienbare Betätigungselement 17 ist durch einen Steueranschluss **26** ersetzt worden, sodass die Steuerfunktionen des Betätigungselements 17 nunmehr elektronisch steuerbar sind.

Ein Werkzeugmaschinen-Adapterteil **28** ist an die Werkzeugmaschine 10 anstelle des Handgriffs 16 montiert worden.

Die Standard-Akkuschnittstelle 18 ist umgeklappt an einer Außenseite des Werkzeugmaschinen-Adapterteils 28 montiert worden.

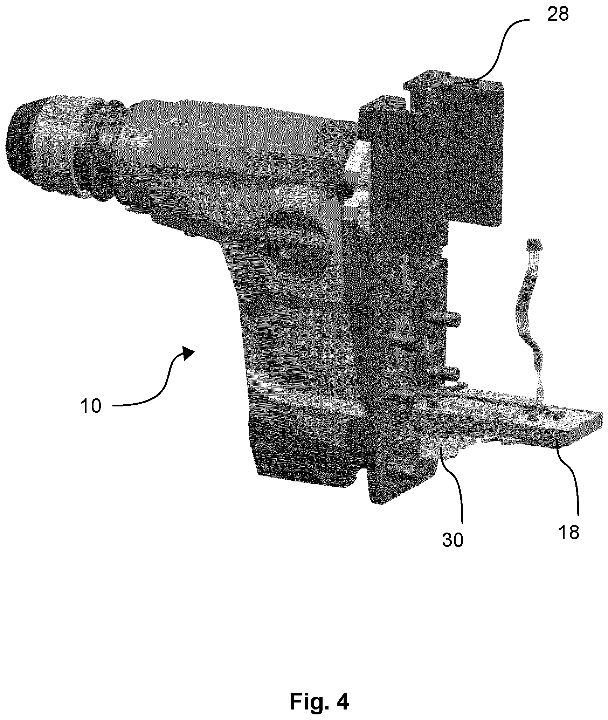

**Fig. 4** zeigt die Werkzeugmaschine 10 in einer perspektivischen Darstellung während ihres Umbaus. Insbesondere ist die Standard-Akkuschnittstelle 18 zu erkennen, die in einem nachfolgenden Schritt entsprechend der Darstellung in Fig. 4 um ca. 90 Grad gegen den Uhrzeigersinn gegen das bereits montierte Werkzeugmaschinen-Adapterteil 28 zu klappen ist.

Zu erkennen sind ferner an der Standard-Akkuschnittstelle 18 ausgebildete Gegenkontakte **30,** die eingerichtet sind, einen elektrischen Kontakt zu den Kontakten 114 (siehe Fig. 2) herzustellen.

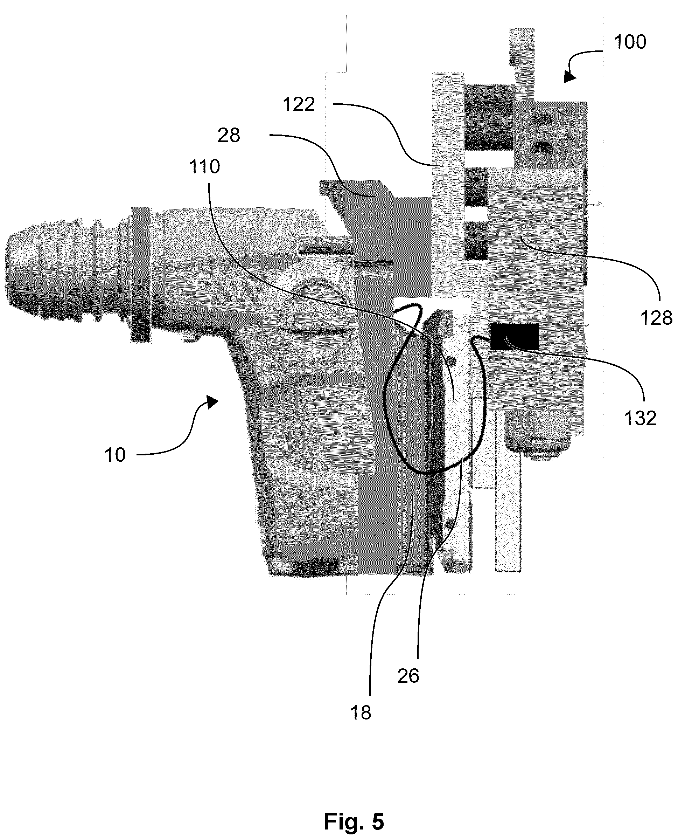

**Fig. 5** zeigt die umgebaute Werkzeugmaschine 10 gemäß Fig. 3, an die der Schnittstellenadapter 100 gemäß Fig. 2 montiert ist.

Dazu ist das Dämpfungselement 122 am Werkzeugmaschinen-Adapterteil 28 montiert, beispielsweise angeschraubt.

Die Werkzeugmaschinen-Verbindungsstelle 110 sitzt an der Standard-Akkuschnittstelle 18.

Der Steueranschluss 26 ist mit einer Steueranschlussbuchse **132** der Steuereinheit 128 verbunden.

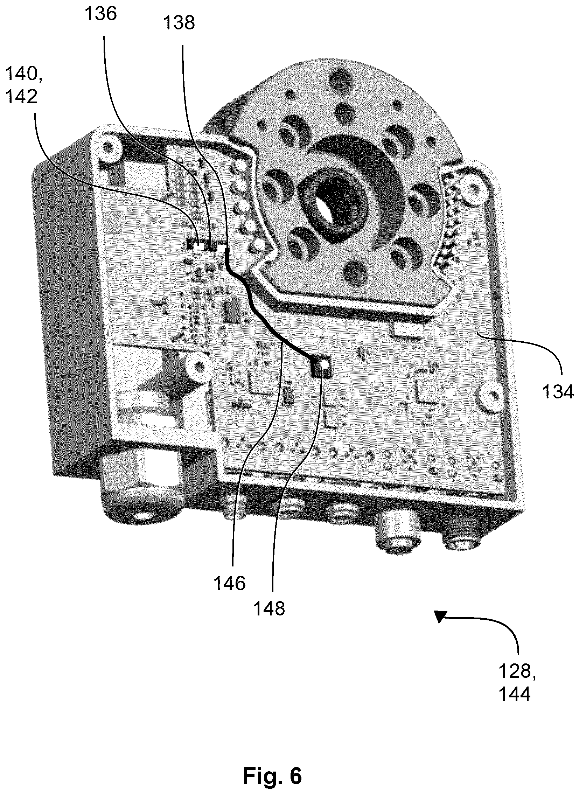

**Fig. 6** zeigt in einer perspektivischen Darstellung eine Innenansicht der Steuereinheit 128.

Die Steuereinheit 128 umfasst eine elektronische Schaltung **134,** die unter anderem einen Mikrocontroller **136** aufweist. Der Mikrocontroller 136 weist einen Mikroprozessor **138** und einen Speicher **140** auf. In dem Speicher 140 ist Programmcode **142** gespeichert, der auf dem Mikroprozessor 138 ausführbar ist.

Unter anderem mit Hilfe des Programmcodes 142 ist die Steuereinheit 128 eingerichtet, ein an einer der Signalschnittstellen ankommendes Signal umzuwandeln. Insbesondere ist sie eingerichtet, an einer Roboter-Signalschnittstelle 144 ankommende, auf einen Gleichstrom mit einer Spannung von 48 V aufmodulierte Signale in auf einen Gleichstrom mit einer Spannung von 22 V aufmodulierte Signale umzusetzen und auf der Werkzeugmaschinen-Signalschnittstelle 116 auszugeben. Insoweit bildet die Steuereinheit 128 auch einen Signalwandler **144.**

Ferner ist die Steuereinheit 128 mit Hilfe des Programmcodes 142 eingerichtet, Sensorsignale **146** eines Vibrationssensors **148** abzufragen. Sie ist ferner eingerichtet, dass, wenn wenigstens eines der Sensorsignale 146 einen Grenzwert überschreitet, ein Bremssignal an der Werkzeugmaschinen-Signalschnittstelle 116 (Fig. 2) auszugeben. Aufgrund des Bremssignals kann die im vorliegenden Ausführungsbeispiel als Gesteinsbohrmaschine ausgebildete Werkzeugmaschine 10 beispielsweise eine Drehzahl reduzieren, sodass sich auch die durch sie ausgelösten Vibrationen vermindern.

**Fig. 7** zeigt ein System **200.** Das System 200 umfasst einen Bauroboter 210, einen Schnittstellenadapter 100 und eine elektrische Werkzeugmaschine 10.

Der Schnittstellenadapter 100 entspricht dem in Bezug auf die vorangehenden Fig. 2, 5 und 6 beschriebenen Schnittstellenadapter 100.

Die Werkzeugmaschine 10 entspricht der in Bezug auf die vorangehenden Fig. 1, 3, 4 und 5 beschriebenen Werkzeugmaschine 10.

Der Bauroboter **210** weist eine mit einem Kettenfahrwerk **212** ausgestattete fahrbare Plattform **214** auf. Auf der fahrbaren Plattform 214 ist ein Manipulator **216** angeordnet. Der Manipulator 216 weist eine Hubvorrichtung **218** auf, auf der ein mehrachsiger Arm **220** montiert ist. Die Hubvorrichtung 218 kann den Arm 220 in vertikaler Richtung verlagern. Der Arm 220 weist wenigstens sechs Freiheitsgrade auf. Somit kann ein an einem Arbeitsende des Arms 220 angeordneter Endeffektor **222** sowohl vertikal als auch horizontal ausgerichtet werden. Somit kann der Bauroboter 210 Bauarbeiten, insbesondere mit der als Gesteinsbohrmaschine ausgebildeten Werkzeugmaschine 10 Bohrarbeiten, an Decken, Wänden und / oder Böden ausführen.

Der Schnittstellenadapter 100 ist am Endeffektor 222 angeordnet. Seine Bauroboter-Signalschnittstelle 126 (siehe Fig. 2) ist mit einem entsprechenden Signalausgang des Bauroboters 210 verbunden.

Unter anderem ist die Standard-Akkuschnittstelle 18 (siehe Fig. 2) der Werkzeugmaschine 10 an der Werkzeugmaschinen-Verbindungsstelle 110 (siehe Fig. 2) des Schnittstellenadapters 100 angeordnet.

### Bezugszeichenliste

- 10: Werkzeugmaschine
- 12: Grundkörper
- 14: Werkzeugaufnahme
- 16: Handgriff
- 17: Betätigungselement
- 18: Standard-Akkuschnittstelle
- 20: Akkumulator
- 22: Verbindungsstelle
- 24: Pfeil
- 26: Steueranschluss
- 28: Adapterteil
- 30: Gegenkontakt
- 100: Schnittstellenadapter
- 110: Werkzeugmaschinen-Verbindungsstelle
- 112: Werkzeugmaschinen-Verbindungsabschnitt
- 114: Kontakt
- 116: Werkzeugmaschinen-Signalschnittstelle
- 118: Bauroboter-Verbindungsstelle
- 120: Halterung
- 122: Dämpfungselement
- 124: Kontaktbuchse
- 126: Bauroboter-Signalschnittstelle
- 128: Steuereinheit
- 130: Verbindungsleitung
- 132: Steueranschlussbuchse
- 134: Schaltung
- 136: Mikrocontroller
- 138: Mikroprozessor
- 140: Speicher
- 142: Programmcode
- 144: Signalwandler
- 146: Sensorsignal
- 148: Vibrationssensor
- 200: System
- 210: Bauroboter
- 212: Kettenfahrwerk
- 214: fahrbare Plattform
- 216: Manipulator
- 218: Hubvorrichtung
- 220: Arm
- 222: Endeffektor

## Patentansprüche

1. **Schnittstellenadapter** (100) zur Verbindung einer elektrischen Werkzeugmaschine (10) mit einem Endeffektor (222) eines Bauroboters (210), wobei der Bauroboter (210) vorzugsweise zur Bearbeitung einer Wand und / oder einer Decke, insbesondere einer Hochbau-Baustelle, einer Tiefbau-Baustelle und / oder einer Industrieanlage eingerichtet ist, **dadurch gekennzeichnet, dass** der Schnittstellenadapter (100) eine Werkzeugmaschinen-Verbindungsstelle (110) zur Verbindung mit einer Werkzeugmaschine (10) aufweist, die komplementär zu einer Standard-Akkuschnittstelle (18) einer Werkzeugmaschine (10) ausgebildet ist, wobei die Standard-Akkuschnittstelle (18) eine eines Herstellers standardisierte Energieversorgungsschnittstelle ist, über die ein dem jeweiligen Standard entsprechender Akkumulator (20) an die Werkzeugmaschine (10) montiert werden kann.

2. Schnittstellenadapter nach dem vorhergehenden Anspruch, **dadurch gekennzeichnet, dass** der Schnittstellenadapter (100) eine Werkzeugmaschinen-Signalschnittstelle (116) und eine Bauroboter-Signalschnittstelle (126) zur Übermittlung wenigstens eines Signals zwischen dem Bauroboter (210) und der Werkzeugmaschine (10) aufweist.

3. Schnittstellenadapter nach einem der vorhergehenden Ansprüche, **dadurch gekennzeichnet, dass** die Werkzeugmaschinen- und die Bauroboter-Signalschnittstellen (116, 126) zusätzlich zur Betriebsenergieübertragung eingerichtet sind.

4. Schnittstellenadapter nach einem der vorhergehenden Ansprüche, **dadurch gekennzeichnet, dass** zumindest ein Teil der Werkzeugmaschinen-Signalschnittstelle (116) als Teil der Werkzeugmaschinen-Verbindungsstelle (110) ausgebildet ist.

5. Schnittstellenadapter nach einem der vorhergehenden Ansprüche, zusätzlich einen Signalwandler (144) umfassend, der eingerichtet ist, ein an einer der Signalschnittstellen (116, 126) ankommendes Signal umzuwandeln, beispielsweise einen Pegel, eine Impedanz und / oder eine Signalcodierung des Signals zu verändern, und an der anderen Signalschnittstelle (116, 126) auszugeben.

6. Schnittstellenadapter nach einem der vorhergehenden Ansprüche, **dadurch gekennzeichnet, dass** wenigstens eine der Signalschnittstellen (116, 126) zur drahtlosen Datenübertragung, insbesondere zur optischen und / oder Funk-basierten Datenübertragung, eingerichtet ist.

7. Schnittstellenadapter nach einem der vorhergehenden Ansprüche, **dadurch gekennzeichnet, dass** der Schnittstellenadapter (100) eine Steuereinheit (128) aufweist, die eingerichtet ist, ein Steuersignal zu erzeugen und an wenigstens eine der beiden Signalschnittstellen (116, 126) auszugeben.

8. Schnittstellenadapter nach einem der vorhergehenden Ansprüche, **dadurch gekennzeichnet, dass** die Steuereinheit (128) eingerichtet ist, wenigstens ein Sensorsignal (146) von der Werkzeugmaschinen-Signalschnittstelle (116) und / oder von der Bauroboter-Signalschnittstelle (126) zu empfangen.

9. Schnittstellenadapter nach einem der vorhergehenden Ansprüche, **dadurch gekennzeichnet, dass** der Schnittstellenadapter (100) wenigstens ein Dämpfungselement (122) zur Dämpfung von auf den Schnittstellenadapter (100) einwirkenden Vibrationen aufweist.

10. Schnittstellenadapter nach einem der vorhergehenden Ansprüche, **dadurch gekennzeichnet, dass** der Schnittstellenadapter (100) wenigstens einen Sensor (146) aufweist.

11. **System (200)** umfassend einen Bauroboter (210), einen Schnittstellenadapter (100) nach einem der vorhergehenden Ansprüche und eine elektrische Werkzeugmaschine (10), wobei die elektrische Werkzeugmaschine (10) eine Standard-Akkuschnittstelle (18) aufweist und wobei die Standard-Akkuschnittstelle (18) der Werkzeugmaschine (10) an der Werkzeugmaschine-Verbindungsstelle (110) des Schnittstellenadapters (100) angeordnet ist.

## Claims

1. Interface adapter (100) for connecting an electric power tool (10) to an end effector (222) of a construction robot (210), wherein the construction robot (210) is preferably configured for performing work on a wall and/or on a ceiling, in particular on a building construction site, on a civil engineering construction site and/or in an industrial plant, **characterized in that** the interface adapter (100) has a power tool connecting point (110) for connecting to a power tool (10), which power tool connecting point is designed complementarily to a standard storage battery interface (18) of a power tool (10), wherein the standard storage battery interface (18) is a standardized energy supply interface from one manufacturer, by means of which a storage battery (20) conforming to the relevant standard can be installed on the power tool (10).

2. Interface adapter according to the preceding claim, **characterized in that** the interface adapter (100) has a power tool signal interface (116) and a construction robot signal interface (126) for transmitting at least one signal between the construction robot (210) and the power tool (10).

3. Interface adapter according to any one of the preceding claims, **characterized in that** the power tool signal interface (116) and the construction robot signal interface (126) are additionally configured for transmitting operating energy.

4. Interface adapter according to any one of the preceding claims, **characterized in that** at least a part of the power tool signal interface (116) is formed as part of the power tool connecting point (110).

5. Interface adapter according to any one of the preceding claims, additionally comprising a signal converter (144) that is configured to convert a signal that is received at one of the signal interfaces (116, 126), for example to modify a level, an impedance and/or a signal coding of the signal, and to output said signal at the other signal interface (116, 126).

6. Interface adapter according to any one of the preceding claims, **characterized in that** at least one of the signal interfaces (116, 126) is configured for wireless data transmission, in particular for optical and/or radio-based data transmission.

7. Interface adapter according to any one of the preceding claims, **characterized in that** the interface adapter (100) has a control unit (128) that is configured to generate a control signal and to output said control signal to at least one of the two signal interfaces (116, 126).

8. Interface adapter according to any one of the preceding claims, **characterized in that** the control unit (128) is configured to receive at least one sensor signal (146) from the power tool signal interface (116) and/or from the construction robot signal interface (126).

9. Interface adapter according to any one of the preceding claims, **characterized in that** the interface adapter (100) has at least one damping element (122) for damping vibrations that act on the interface adapter (100).

10. Interface adapter according to any one of the preceding claims, **characterized in that** the interface adapter (100) has at least one sensor (146).

11. System (200) comprising a construction robot (210), an interface adapter (100) according to any one of the preceding claims, and an electric power tool (10), wherein the electric power tool (10) has a standard storage battery interface (18), and wherein the standard storage battery interface (18) of the power tool (10) is arranged on the power tool connecting point (110) of the interface adapter (100).

## Revendications

1. Adaptateur d'interface (100) pour la liaison d'une machine-outil électrique (10) avec un effecteur terminal (222) d'un robot de construction (210), le robot de construction (210) étant de préférence conçu pour le traitement d'un mur et/ou d'un plafond, notamment d'un chantier de construction de bâtiment, d'un chantier de génie civil et/ou d'une installation industrielle, **caractérisé en ce que** l'adaptateur d'interface (100) présente un point de liaison de machine-outil (110) pour la liaison à une machine-outil (10), qui est conçu de manière complémentaire d'une interface de batterie normalisée (18) d'une machine-outil (10), l'interface de batterie normalisée (18) étant une interface d'alimentation en énergie normalisée d'un fabricant, par l'intermédiaire de laquelle un accumulateur (20) correspondant à la norme respective peut être monté sur la machine-outil (10).

2. Adaptateur d'interface selon la revendication précédente, **caractérisé en ce que** l'adaptateur d'interface (100) possède une interface de signal à machine-outil (116) et une interface de signal à robot de construction (126) pour la transmission d'au moins un signal entre le robot de construction (210) et la machine-outil (10).

3. Adaptateur d'interface selon l'une des revendications précédentes, **caractérisé en ce que** les interfaces de signal à machine-outil et à robot de construction (116, 126) sont en outre conçues pour la transmission d'énergie de fonctionnement.

4. Adaptateur d'interface selon l'une des revendications précédentes, **caractérisé en ce qu'**au moins une partie de l'interface de signal à machine-outil (116) est conçue comme faisant partie du point de liaison de machine-outil (110).

5. Adaptateur d'interface selon l'une des revendications précédentes, comprenant en outre un convertisseur de signal (144) qui est conçu pour convertir un signal arrivant sur l'une des interfaces de signal (116, 126), par exemple pour modifier un niveau, une impédance et/ou un codage de signal du signal, et pour le délivrer à l'autre interface de signal (116, 126).

6. Adaptateur d'interface selon l'une des revendications précédentes, **caractérisé en ce qu'**au moins l'une des interfaces de signal (116, 126) est conçue pour la transmission sans fil de données, en particulier pour la transmission optique et/ou par radio de données.

7. Adaptateur d'interface selon l'une des revendications précédentes, **caractérisé en ce que** l'adaptateur d'interface (100) possède une unité de commande (128) qui est conçue pour générer un signal de commande et pour le délivrer à au moins l'une des deux interfaces de signal (116, 126).

8. Adaptateur d'interface selon l'une des revendications précédentes, **caractérisé en ce que** l'unité de commande (128) est conçue pour recevoir au moins un signal de capteur (146) en provenance de l'interface de signal à machine-outil (116) et/ou de l'interface de signal à robot de construction (126).

9. Adaptateur d'interface selon l'une des revendications précédentes, **caractérisé en ce que** l'adaptateur d'interface (100) possède au moins un élément d'amortissement (122) pour l'amortissement des vibrations agissant sur l'adaptateur d'interface (100).

10. Adaptateur d'interface selon l'une des revendications précédentes, **caractérisé en ce que** l'adaptateur d'interface (100) possède au moins un capteur (146).

11. Système (200) comprenant un robot de construction (210), un adaptateur d'interface (100) selon l'une des revendications précédentes et une machine-outil électrique (10), la machine-outil électrique (10) possédant une interface de batterie normalisée (18) et l'interface de batterie normalisée (18) de la machine-outil (10) étant disposée au point de liaison de machine-outil (110) de l'adaptateur d'interface (100).
